# EUROPEAN PATENT SPECIFICATION

(11) **EP 1 396 793 B1**
(45) Date of publication and mention of the grant of the patent: **26.12.2007**
(21) Application number: 02738675.4
(22) Date of filing: 12.06.2002
(51) Int. Cl.: G06F 17/21

(54) **DATA PROCESSING METHOD, DATA PROCESSING PROGRAM, AND DATA PROCESSING APPARATUS**
DATENVERARBEITUNGSVERFAHREN, DATENVERARBEITUNGSPROGRAMM UND DATENVERARBEITUNGSVORRICHTUNG
PROCEDE DE TRAITEMENT DE DONNEES, PROGRAMME DE TRAITEMENT DE DONNEES ET APPAREIL DE TRAITEMENT DE DONNEES

(30) Priority: 14.06.2001 JP 2001179415
(43) Date of publication of application: 10.03.2004
(60) Divisional application: 07000674.7
(73) Proprietor: Sharp Kabushiki Kaisha, Osaka-shi, Osaka 545-8522 (JP)
(72) Inventor: SAWADA, Yuji, Osaka-shi, Osaka 536-0021 (JP)
(74) Representative: Brown, Kenneth Richard
(86) International application number: PCT/JP2002/005880
(87) International publication number: WO 2002/103554

(56) References cited:
- GB-A- 2 357 348
- JP-A- 10 143 498
- JP-A- 10 269 160
- JP-A- 2001 195 391
- US-A- 4 912 669
- US-A- 4 996 665
- C.-C. KANNE, G. MOERKOTTE: "Efficient storage of XML data" 1999, , PROC. OF ICDE, CALIFORNIA, USA , XP002359294 * abstract * * page 1, lines 1-4 * * page 3, lines 2-11 * * sequence 3.2.2 *

## Description

### Technical Field

The present invention relates generally to data processing methods programs and apparatuses, structured data, computer readable recording media having the structured data recorded therein, and transmission devices, and particularly to data processing methods programs and apparatuses, structured data, computer readable recording media having the structured data recorded therein, and transmission devices capable of processing hierarchically structured electronic data.

### Background Art

As structured electronic data causing a prescribed process to be executed in accordance with a definition of a document description language that is a data format for recording a structured document having a hierarchical structure, Standard Generalized Markup Language (SGML), Extensible Markup Language (XML) and the like are known. In particular, XML is actively used for example for electronic documents, electronic data and the like exchanged on the Internet.

As a method of processing that handles XML electronic data, there exist the Document Object Model (DOM) format and the Simple API for XML (SAX) format.

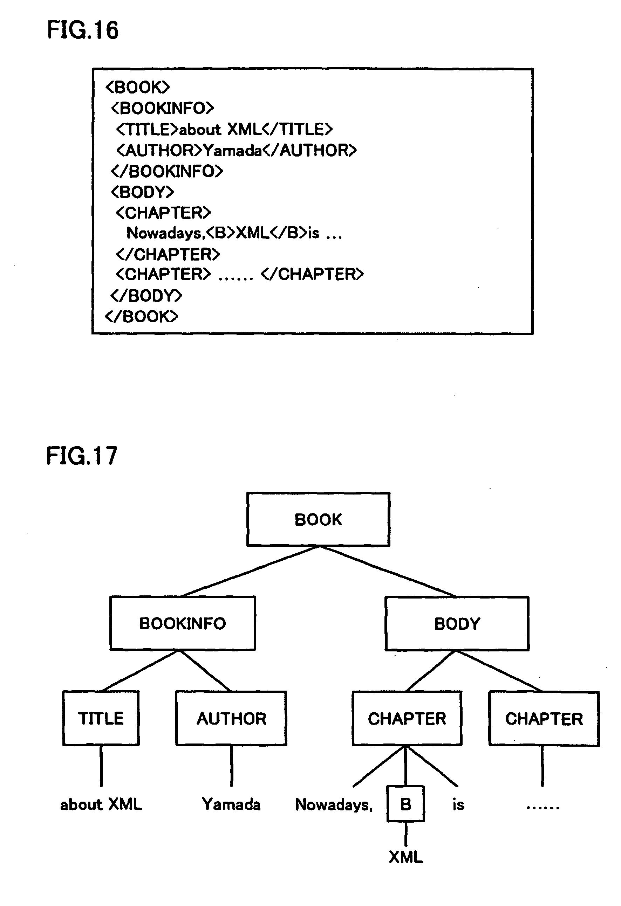

The DOM format is a method of processing that reads all of electronic data of the interest and comprehends a hierarchical structure of each and every element in the electronic data and then accesses each element of the electronic data. For example, if there exists electronic data having such a hierarchical structure as shown in Fig. 16, the entirety of the electronic data is first read and all elements' hierarchical structures are analyzed. Fig. 16 only shows the electronic data's hierarchical structure and does not show text or content. From the electronic data having the Fig. 16 hierarchical structure a tree structure such as shown in Fig. 17 is created and then each element (title, author and the like) is accessed. Thus in the DOM electronic data processing method electronic data's hierarchical structure is first comprehended and the data is then processed. The method is thus characterized in that any element is readily accessed.

By contrast, the SAX format is a method of processing that reads electronic data from the top successively, provides structural analysis only for a read element(s) and processed the same. This method can process electronic data successively without awaiting a process of analyzing the entire electronic data and provides reduced overhead in processing speed and memory capacity advantageously.

While both the DOM and SAX formats have their respective advantages, they also have their respective disadvantages.

More specifically, for the DOM format, if processing only a portion of electronic data is desired, the entirety of the electronic data must be structurally analyzed to generate a tree structure, which requires extra processing. The DOM format is also disadvantageous in that if electronic data has a large size, an increased processing time is required to create the data's tree structure and an increased amount of memory is required to store the tree structure.

By contrast, the SAX format is an access format based on processing electronic data from the top successively. Accordingly, if electronic data's content is not processed from the top successively and a desired element is handled in a desired order, extra reading and structural analysis processes would be introduced. Furthermore, when an element of the latter half of electronic data is processed, the electronic data must be read from the top and structurally analyzed, which requires an extra processing time.

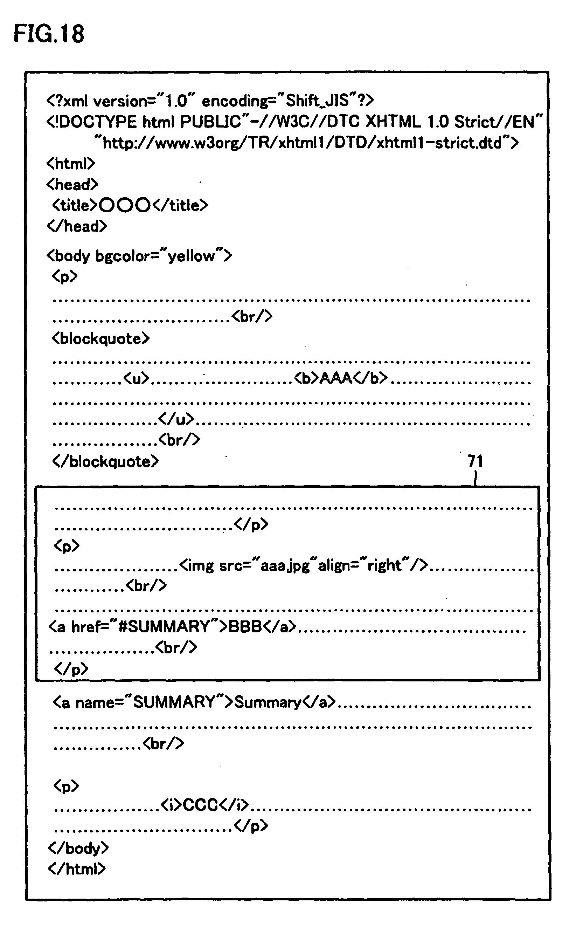

In contrast, there is also a method of processing other than the DOM and SAX formats. This method extracts only a desired element without analyzing a hierarchical structure. With this method, however, the extracted element cannot appropriately be processed, since the element under which a desired area to be extracted is included may affect the element's meaning, a position for display, a size, an attribute and the like, changing them. For example, with reference to Fig. 18, which shows an Exemplary, hierarchically structured, Extensible Hypertext Markup Language (XHTML) document, a top portion of an area 71 is sandwiched by <html>, <body bgcolor= "yellow">, <p>: Of these, <body bgcolor= "yellow">, indicates that the area sandwiched by tags is text data and also means that the text's background is set yellow. Whether these tags exist or not determines whether the text's background will be yellow or white (a default value). As such, if an attempt is made to read only area 71 from the file and perform a process to display the same, the information that the text's background is yellow cannot be obtained and an appropriate display process cannot be performed.

Thus in general for hierarchically structured electronic data if an attempt is made to read only a desired area to be processed and process the area, it cannot accurately be processed as control information (a tag, an attribute and the like) written in an area other than that to be processed cannot be obtained.

Accordingly the present invention contemplates a data processing method, program and apparatus, structured data, computer readable recording medium having the structured data recorded therein, and transmission device.

US 4912669 discloses a document editing system for storing a plurality of format data records in a tree structure which define the format of a document. The format data records comprise any combination of a title field, a basic field, and a group field. A document data management section, in response to a document preparation request from a work station, prepares a basic document having a tree structure consistent with the document format data records. Furthermore, the document data management section updates the basic document with externally input data to prepare a target document. The document data management section determines the number of lines and characters per line of a group field including a line/character increase or decrease field, from a tree structure subordinate to the group field.

### Disclosure of the Invention

According to the present invention there is provided a method of processing structured data formed of hierarchically structured electronic data and sub block data used to divide said electronic data into a plurality of blocks for processing, said sub block data includes positional information of each said block of electronic data, and hierarchical information of said block at a start location and an end location, the method comprising the steps of:
reading from said electronic data a block including desired electronic data;
using sub block data of said read block to link a start location control code, block data, and an end location control code in this order, and analyze a hierarchical structure of said desired electronic data; and
using a resultant analysis of said hierarchical structure to perform a prescribed process.

Preferably the electronic data is electronic data for display and the prescribed process is a process calculating a layout used to display the read block and displaying the read block according to the layout.

Preferably the step of creating sub block data for the electronic data free of sub block data before the electronic data is processed.

Preferably the plurality of blocks are substantially equal in size.

Preferably when the electronic data includes a link function allowing a jump within the electronic data to any location, the sub block data includes positional information of a destination of a jump effected by the link function.

Preferably the method including the steps of: transmitting to the server a name of electronic data to be subjected to the prescribed process; receiving sub block data from the server for dividing the electronic data into a plurality of blocks for processing; requesting the server to transmit a block including the electronic data to be subjected to the prescribed process, and receiving the block's data.

Preferably the step of receiving the sub block data from the server when the sub block data is absent the sub block data is created and then received from the server.

According to a second aspect of the present invention there is provided a data processing program causing a prescribed process to be performed in accordance with a definition of a prescribed document description language for structured data including hierarchical structured electronic data and sub block data used to divide said electronic data into a plurality of blocks for processing, said electronic data and said sub block data being paired, said sub block data includes positional information of each said block of electronic data, and hierarchical information of said block at a start location and an end location, the program causing a computer to execute the steps of:
reading block data of said electronic data, as based on said sub block data;
analysing from said read block data and said sub block data a hierarchical structure included in said block data by linking a start location control code, block data, and an end location control code in this order; and
in accordance with a resultant analysis of said hierarchical structure and said definition of said document description language, causing said prescribed process to be performed for said block data.

Preferably, the program causing a computer to execute the steps of transmitting to the server a name of electronic data to be subjected to the prescribed process; receiving sub block data from the server for dividing the electronic data into a plurality of blocks for processing; requesting the server to transmit a block including the electronic data to be subjected to the prescribed process, and receiving the block's data.

According to a third aspect of the present invention there is provided a data processing apparatus processing hierarchically structured electronic data, said electronic data being accompanied by sub block data corresponding to auxiliary information for dividing said electronic data into a plurality of blocks for processing, said sub block data includes positional information of each said block of electronic data, and hierarchical information of said block at a start location and an end location the apparatus comprising:
an input portion reading a block including said electronic data to be processed, and said sub block data;
a data structure analysis portion using said sub block data to link a start location control code, block data, and an end location control code in this order, and analyze a hierarchical structure of said block read; and
a processing portion using a result provided by said data structure analysis portion to perform a prescribed process.

Preferably the electronic data being document data for display, the processing portion includes: a layout calculation portion using the hierarchical structure of the block analysed by the data structure analysis portion to calculate a layout used to display the read block; and a display unit using the layout for display.

Preferably the apparatus including: a transmission and reception portion transmitting to the server a block including the electronic data to be subjected to the prescribed process, and receiving data of the block and the sub block data from the server.

Preferably, the apparatus is a mobile terminal.

In order that the present invention may be more readily understood, specific embodiments thereof will now be described with reference to the accompanying drawings.

### Brief Description of the Drawings

In the drawings:
Fig. 1 is a block diagram of a data processing apparatus 100 of the present invention in a first embodiment;
Fig. 2 is an overview of a display device of the present invention in the first embodiment, as specifically implemented exemplarily by mobile equipment;
Fig. 3 shows a specific outline of sub block data in the present embodiment; -
Fig. 4 specifically shows electronic data divided into a plurality of blocks;
Fig. 5 shows a specific example of sub block data set for the Fig. 4 electronic data;
Fig. 6 is a flow chart representing a process performed by data processing apparatus 100 of the present invention in the first embodiment;
Fig. 7 shows a specific example of data created from one block of data and sub block data;
Fig. 8 shows a specific example of electronic structure which does not have a completely hierarchical structure;
Fig 9 is a block diagram of a data processing apparatus 200 of the present invention in a second embodiment;
Fig. 10 is a flow chart illustrating a process performed by data processing apparatus 200 of the present invention in the second embodiment;
Fig. 11 is a flow chart representing a process in the second embodiment that is performed to create sub block data;
Figs. 12A-12C show a specific example of data divided in the middle of a line into blocks and a specific example of indication;
Fig. 13 is a block diagram of the data processing apparatus of the present invention in a third embodiment;
Fig. 14 is a flow chart representing a process in the third embodiment that is performed to create sub block data;
Fig. 15 is a block diagram of the data processing apparatus of the present invention in the third embodiment;
Fig. 16 shows a specific example of hierarchically structured electronic data;
Fig. 17 is a view for illustrating a tree structure extracted from hierarchically structured electronic data; and
Fig. 18 shows a specific example of hierarchically structured electronic data.

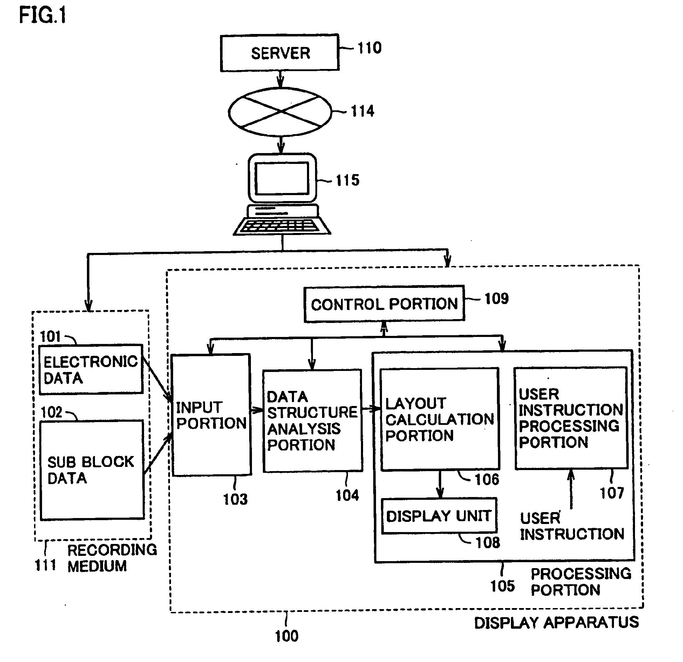

Fig. 1 is an exemplary block diagram of a data processing apparatus 100 in a first embodiment that is a display device.

With reference to Fig. 1, a server 110 receives a request from a user and transmits electronic data recorded in a database. A network 114 connects server 110 and the user's personal computer (PC) 115 together. A recording medium 111 extracts electronic data from PC 115 and supplies data processing apparatus 100 with the electronic data.

Note that PC 115 may be replaced with an electronic data reception apparatus (not shown) installed for example in convenience stores, railway station premises and the like, and from the apparatus electronic data may be extracted and recorded in recording medium 111. In extracting the electronic data from the apparatus and recording the data in recording medium 111, the service can be charged for. Alternatively, electronic data transmitted from server 110 may be received by data processing apparatus 100 and recorded in recording medium 111 without passing through PC 115.

Further referring to Fig. 1, electronic data 101 is electronic data recorded in recording medium 111 and sub block data 102 is data recorded in recording medium 111 and accompanying electronic data 101.

Electronic data 101 described above is structured electronic data for causing a prescribed process to be executed in accordance with a definition of a document description language and is recorded using a data format for recording a structured document having a hierarchical structure, such as SGML and XML.

Sub block data 102 is data dividing structured electronic data 101 into a plurality of blocks and causing a prescribed process to be executed for each block. Sub block data 102 is paired with electronic data 101.

Further referring to Fig. 1, an input portion 103 reads electronic data 101 and sub block data 102. From electronic data 101 and sub block data 102 a data structure analysis portion 104 analyzes data's hierarchical structure. A processing portion 105 performs a prescribed process based on the hierarchical structure analyzed by data structure analysis portion 104. A control portion 109 controls input portion 103, data structure analysis portion 104, and processing portion 105.

Processing portion 105 can have different configurations for different contents of electronic data and different process. If data processing apparatus 100 is for example a display device displaying text such as electronic documents and electronic data exchanged on the Internet, books, textbooks, magazines, novels, and articles, then, as shown in Fig. 1, processing portion 105 is configured of a layout calculation portion 106 using a resultant analysis provided by data structure analysis portion 104 to calculate a layout used to display the text, a display unit 108 using the calculated layout to display the text, and a user instruction processing portion 107 processing user instructions such as scrolling.

If the electronic data is voice, processing portion 105 is modified to be a reading device. Furthermore, for display unit 108, an audio reproduction unit is used, and layout calculation portion 106 is modified to be a portion that determines which portion to be read or not and which portion to be stressed or not when it is read and that also introduces an interval between each reading. When the electronic data is voice, the data's hierarchical structure may be considered in changing the voice's attribute in reading. Furthermore, if the electronic data is voice, data processing apparatus 100 requires a scenario interpretation portion, an audio output portion, and a synchronization portion synchronizing each element to control an order of reproduction.

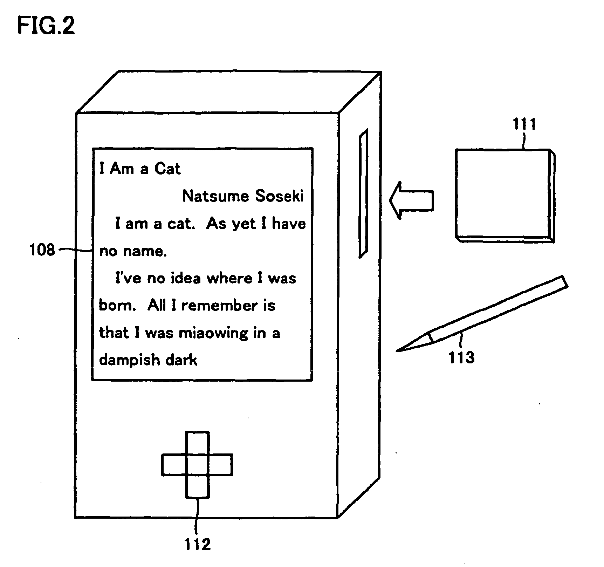

Fig. 2 specifically shows an example provided when data processing apparatus 100 is implemented by mobile equipment.

In Fig. 2, display unit 108 provides an indication based on a layout for display that has been calculated by layout calculation portion 106. Display unit 108 is configured for example of a display. Furthermore, recording medium 111 is, as has been shown in Fig. 1, a recording medium having recorded therein electronic data 101 to be processed and sub block data 102 extracted by PC 115, an electronic data reception apparatus or the like via server 110 and network 114 from a document database. When recording medium 111 is inserted into the body of data processing apparatus 100, the two data are read through input portion 103 provided in data processing apparatus 200 corresponding to a display device. Furthermore a cross key 112 is used by a user for example to scroll text and select a book, a document or the like to be displayed. Furthermore, when electric data includes a link function, a pen 113 is used to jump to a link destination. The pen is also used to change an item that the display device or data processing apparatus 100 requests the user to confirm.

Note that rather than recording medium 111 having electronic data 101 and sub block data 102 recorded therein, data processing apparatus 100 may internally be provided with a region for recording the data therein. Alternatively, the two data may be recorded in server 110 on network 114 or a database and processed while the data are downloaded.

The sub block data will now be described.

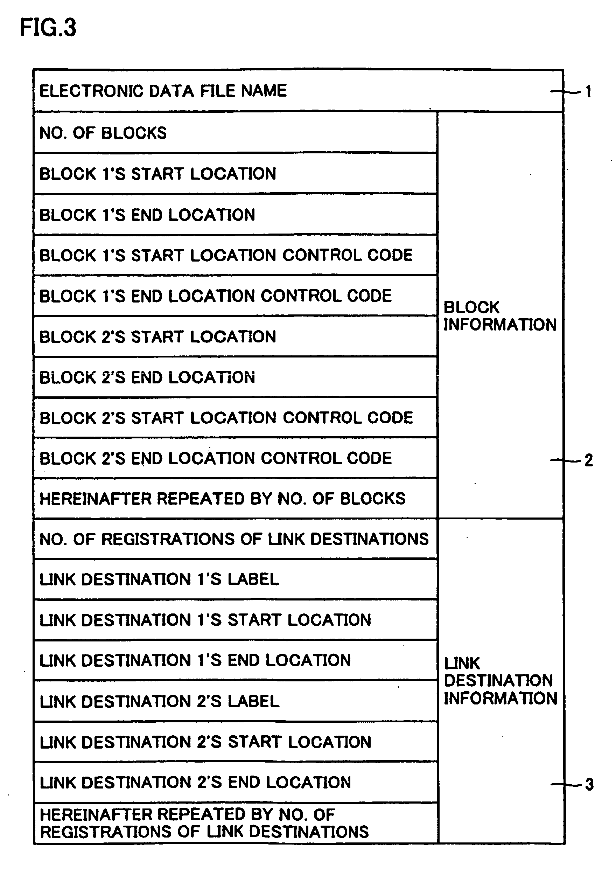

Generally, the sub block data is configured of the three data areas of an electronic data file name 1, block information 2 and link destination information 3, as shown in Fig. 3.

Electronic data file name 1 is an area prepared to record to which electronic data the sub block data corresponds. If the sub block data is recorded within electronic data or linked thereto and thus recorded, the electronic data file name 1 area may be dispensed with.

Furthermore, for some electronic data to be processed, the link destination information 3 area may be absent.

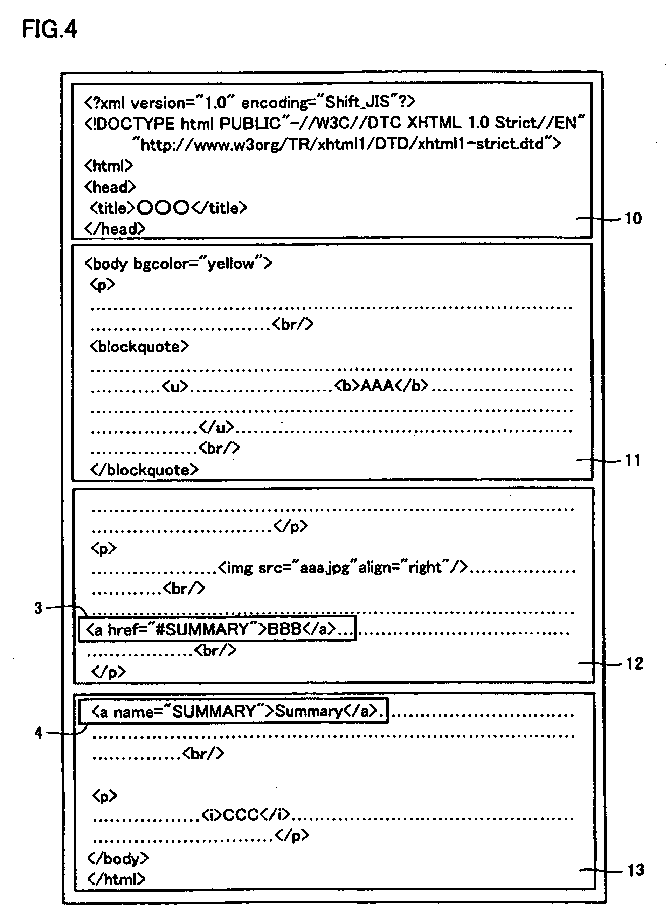

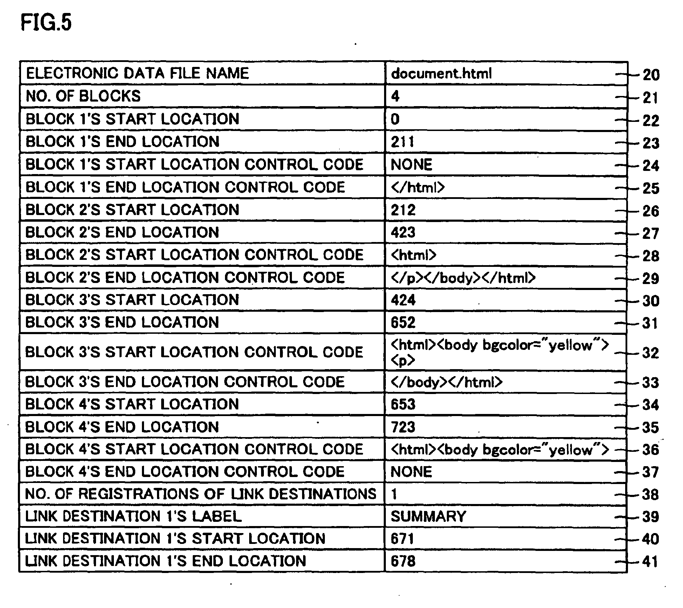

Hereinafter the three area's format will be described by referring to an XHTML document as a specific example of electronic data described in accordance with a definition of a document description language and having a hierarchical structure. If the XHTML document shown in Fig. 18 is divided into four blocks (10-13), as shown in Fig. 4, the sub block data that corresponds to this XHTML document will be as shown in Fig. 5.

With reference to Fig. 5, the sub block data has an area 20 serving as the electronic data file name 1 area having the Fig. 4 XHMTL document's file name recorded therein.

The sub block data has areas 21-37 serving as the block information 2 area.

Area 21 records a block count. As the document is divided into four blocks, this area records 4.

Areas 22-25, 26-29, 30-33, 34-37 are areas of block information for blocks 10, 11, 12, 13, respectively. In general for division into n blocks the structure of the block information of areas 21-25 is repeated n times and thus recorded.

Areas 22, 26, 30, 34 record their respective blocks' start locations and areas 23, 27, 31, 35 record their respective blocks' end locations, in the form of a byte count from the file's top. If the data belonging to block 11 is to be extracted, the values of the block information of areas 26 and 27 are checked and the 212th through 423rd bites as counted from the file's top are read.

Areas 24, 28, 32, 36 each records a start tag which is still effective at the corresponding block's start location. The area 24 block information is a start tag which is still effective at the block 10 start location. However, as block 10 starts at the file's top, there does not exist a control code recorded in area 24. At the block 11 start location, <html> is not closed, and area 28 thus records <html>. For the block 12 start location, at which a plurality of tags (<html>, <body bgcolor="yellow">, <p>) are not closed, they are linked in the order of appearance, i.e., <html><body bgcolor="yellow"><p> to record block information in area 32. Note that when a tag has an attribute, such as the <body> tag having an attribute (bgcolor="yellow"), the tag is recorded with the attribute attached thereto. For block 13, <html><body bgcolor="yellow"> are also recorded in area 36 as block information.

Areas 25, 29, 33, 37 each records an end tag of a tag which has not been closed at the corresponding block's end location. At the block 10 end location the <html> tag is still effective, and area 25 records block information </html>. Furthermore, at the block 11 end location the <html>, <body bgcolor="yellow">, <p> tags are not closed, and accordingly in an order reverse to the order of their appearance the above end tags are linked to be </p></body></html> and the block information is recorded in area 29. Similarly for block 12 block information </body></html> is recorded. At the block 13 end location all tags are closed, and area 37 records nothing.

Areas 38-41 are areas of link destination information 3, and of the Fig. 18 XHTML document, a position of a label designated as a link destination is recorded.

The linking of an XHMTL document will now be briefly described. For an XHMTL document, an <a> tag can be used to provide a link to a different file or a portion of a file. For example, in Fig. 4, link destination information 3, 4 are examples of establishing a link to a portion of the same file. In this example when a character string "BBB" in link destination information 3 surrounded by <a> tags is clicked the location for display jumps to a location at which a label "SUMMARY" designated by a *href* attribute is set, i.e., link destination information 4 with "SUMMARY" set at <a>'s *name* attribute.

In Fig. 5, areas 38-41 each records positional information of a label of a link destination, i.e., positional information of a label set by the <a> tag's *name* attribute. For the Fig. 4 XHMTL document, there is only a single <a> tag that has the *name* attribute and accordingly area 38 records 1 and the combination of areas 39-41 is recorded only once.

In general if there are n <a> tags having the *name* attribute the link destination information of the structure of areas 39-41 is repeated n times. Area 39 records a label name recorded at an <a> tag's *name* attribute, and areas 40, 41 record start an end locations, respectively, of a character string sandwiched by <a> tag, in the form of a byte count from the file's top.

Note that a block has a size determined by the apparatus's processing capability. In other words, a larger block necessitates an increased amount of processing per block and hence increased time and increased memory and resource capacities to be used. As such, desirably, the block's size is determined by the apparatus's processing capability. A factor to determine the apparatus' processing capability includes the processing capability of a central processing unit (CPU) mounted in the apparatus, memory capacity, resource capacity, and the like.

On the other hand, the block's size is also determined by the number of characters displayed on a screen and a factor which determines it. For example, an apparatus displaying text for example of an electronic book is often designed so that after it displays one screen of text it waits until a user instruction to move page is received. If in that case the block has a size set to be extremely large relative to the number of characters displayed on a screen, the method for processing in the present embodiment, which reads a block as a single unit, will also read data unnecessary as it is not displayed on a screen, which is useless. As such, desirably, a block size is determined by the number of characters displayed on a screen. Note that the number of characters displayed on a screen varies with the size and resolution of a screen of the display device, the font of the character(s) to be displayed, line and character spacings, margin size, and the like, and by these factors the block size may be changed.

The sub block data varies slightly in structure and format depending on the type of electronic data of interest. In general, for XML electronic data, link destination information 3 of Fig. 3 is excluded and the electronic data file name 1 and block information 2 areas exist and are also identical in format. As link destination information 3 is information for a link function, a function of an XHTML document, the information may be absent for electronic data other than an electronic book such as an XHMTL document. For electronic data causing a process to proceed with reference to data in a different block and electronic data having a function responsive to the user's operation to display or reproduce data in a different block, however, the location of the data may be recorded as link destination information 3 to facilitate access.

Applicable electronic data is not limited to the XML format. In general, the method for processing in the present embodiment the method for processing in the present embodiment applicable to any structured documents having a hierarchical structure. In this case, more specifically, a record is made at the block information 2 start/end location control code such that a hierarchical structure at a block's start/end location can be understood, in their respective formats.

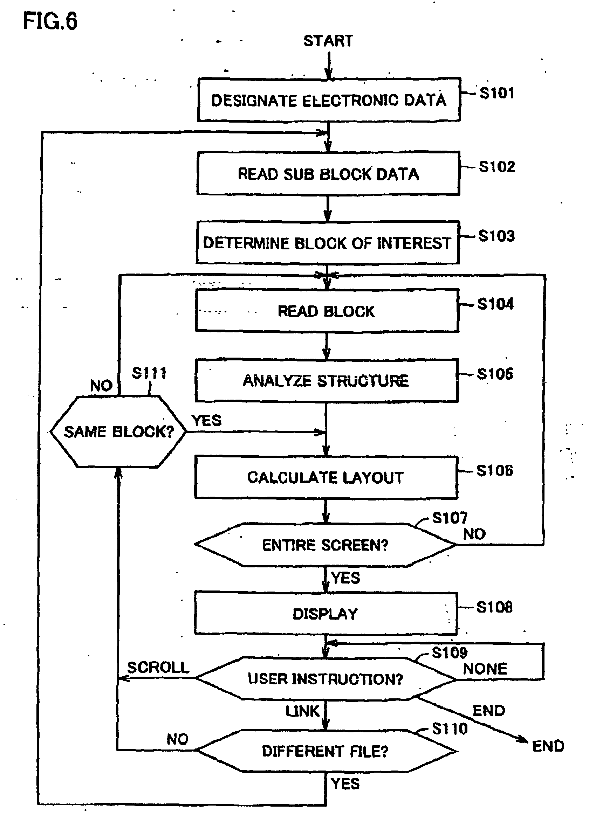

The operation of processing apparatus 100 using electronic data and sub block data allow data will now be described hereinafter with a display device as an example. Fig. 6 represents a flow chart for the display device.

With reference to Fig. 6, initially via user instruction processing portion 107 a user designates electronic data to be displayed (step (S)101) and sub block data prepared for the electronic data is read via input portion 103 (S102).

Then, of the sub block data read at S102, each block's start/end location, and a location of an area to be displayed on a screen, as seen from the file's top, are referred to to determine which block to be read(S103), and only a necessary block is read via input portion 103 (S104).

Then with reference to the contents of the sub block data read at step S102 the read block's start/end location control code is examined. Then a start location control code, block data, and an end location control code are linked in this order and a hierarchical structure is analyzed to create a tree structure (S105).

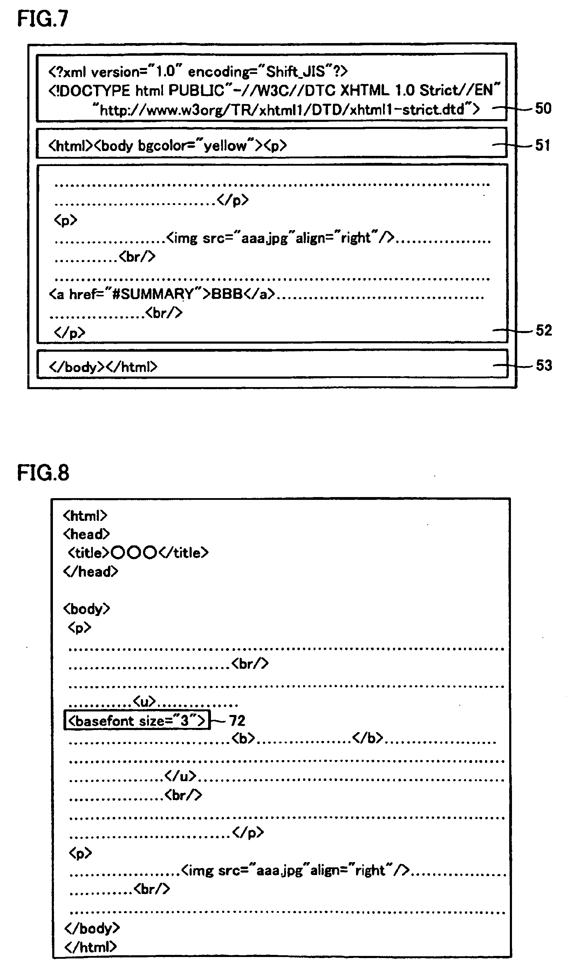

For example if the Fig. 4 block 12 is read, the block information in the Fig. 5 sub block data at an area 32 and that in the data at an area 33 are linked together, one ahead and the other behind, to create data, as shown in Fig. 7, and analyze a hierarchical structure. In Fig. 7, the area 51 data is a control code recorded in the block information of area 32, the area 52 data is data of block 12 read at S104, and area 53 is a control code recorded in area 33. Note that, as shown in Fig. 7, if necessary, the top may have attached thereto an XML declaration and a documentary declaration, such as the data of area 50. Step 105 is performed at data structure analysis portion 104.

Then layout calculation portion 160 uses the tree structure for a single block that has been created at S105 to calculate a layout used in a screen for display (S106). If as a result a layout of the entirety of a screen for display that display unit 108 has is determined (S 107) the control proceeds with S108 to display the designated electronic data on display unit 108.

If at S 107 the screen for display still has an area for which no layout is determined, the control returns to S104, and a subsequent block is read and a tree structure is created (S 105), and the current block's layout process is performed as continued from a layout screen obtained for the immediately preceding block (S106). Subsequent steps 107 and 108 are similar to those previously described.

After at S108 display unit 108 displays the data, the control goes to S109 and waits for the user's instructions. Until the user's instruction is received, the control awaits at S 109.

If a user instruction is received to terminate the process for display, the control terminates the process.

If at S 109 a user instruction is received to scroll to a subsequent page or a previous page, the control proceeds with S111 and determines as a result of the user's scroll instruction whether content to be subsequently displayed is identical to the current block. If so then the control moves to S106 and performs a layout process based on the previously created tree structure and, similarly as has been described previously, S107 and the subsequent steps continue.

If at S111 the control determines that the content to be subsequently displayed differs from the current block, the control proceeds with S 104, and reads a block necessary for display, and similarly as has been described previously, continues S105 and the subsequent steps.

If at S 109 an instruction is received to for example employ a link jump to jump to a different area, the control proceeds with S110 and determines whether the link is destined for a different file or the same file. For example for an XHMTL document when a character string sandwiched by <a> tags having the *href* attribute is clicked, from the attribute's value whether the link is that to a different file or within the same file is determined. If it is a link within the same file, then the control proceeds with S111 and determines whether the link destination is identical to the current block. In doing so, link destination information 3 recorded in sub block data is referred to to determine in which block the link destination is included. For example for the Fig. 5 example the areas 38-41 block information is referred to to determine at which location in the file a label of the link destination designated by <a>'s *href* attribute is present. Thereafter the areas 21-37 block information is referred to to examine which block includes the location to examine the link destination's block.

If the obtained link destination's block is identical to the current block, the control proceeds with S106 and performs a process similar to that previously described.

If the link destination's block is different from the current block, then the control proceeds with S104, and reads the different block and performs a process similar to that previously described.

If at S 110 the control determines that the link destination is a different file, then the control proceeds with S102, and reads sub block data prepared for the link destination's file and performs a process similar to that previously described.

Using sub block data as described above for processing allows only a portion of electronic data to be read and processed so that it can be processed fast and with reduced memory.

Note that while the present embodiment has some portions described by referring to an XHTML document as an example, it is apparent from the above description that its application is not limited to a device displaying an XHTML document. For devices displaying electronic data having a link functions such as an XHMTL document and hierarchically structured, the Fig. 3 sub block data and the Fig. 6 flow chart are applicable. Furthermore, even if electronic data is free of a link function, Fig. 3 without link destination information 3 and Fig. 6 without S110 are applicable. For example, JepaX (JEPA electronic publishing exchange format) promoted by Japan Electronic Publishing Association for standardization, Network Electronic Book Format proposed by Japan Electronic Book Committee, and any other similar electronic data having a hierarchical structure recorded for example by XML can be processed similarly as shown in Fig. 6.

Furthermore the present invention is characterized in that preparing sub block data allows hierarchically structured electronic data to be only partially read and processed. As such in the Fig. 1 block diagram by replacing processing portion 105 with a process unique to the processing apparatus, the present invention can be applied not only to a display device but also different processing apparatuses. In that case, the Fig. 6 flow chart has steps 106-108 replaced by a process unique to the processing apparatus of interest. For example for a text reading apparatus the steps are replaced with the steps of determining whether which portion of electronic data to be read or not, setting sound quality and intensity depending on the portion of interest to read it, and reproducing a voice.

While in the present embodiment the present invention has been described by referring to electronic data having a hierarchical structure such as XML, the present invention is also applicable to a HTML document or similar data that does not completely have a hierarchical structure.

For example for a HTML document there is a tag <basefont>, which designates a basefont size. When a designation is made as shown in Fig. 8 at an area 72, a basefont size of 3 is set, however hierarchically the subsequent text may be structured, until a subsequent <basefont> tag designation arrives. For example, while the <basefont> indicated in area 72 is sandwiched for example by <p> and <u> tags, despite that <p> and <u>'s end tags appear the setting is still held and accordingly the hierarchical structure is broken. If there exists such a tag having an effect maintained ignoring a hierarchical structure, then at an end location control code of the block that includes that tag the tag's end tag can also be recorded and for a subsequent block the tag can also be added to a start location control code and the tag's end tag to an end location control code so that if a different block alone is to be processed it can be understood the tag has effect on the block. As such, a process similar to Fig. 6 can be provided.

### Second Embodiment

The present invention in a second embodiment will now be described.

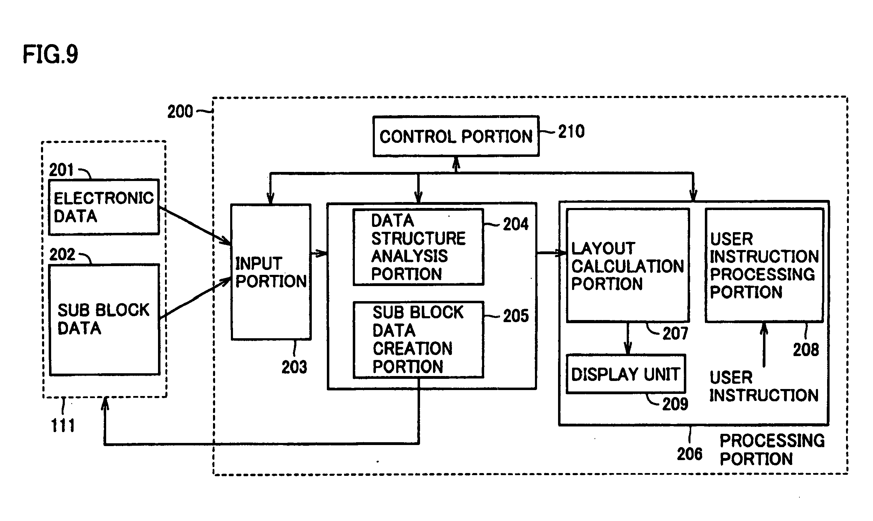

Fig. 9 is an exemplary block diagram of a data processing apparatus 200 of the present invention in the second embodiment.

With reference to Fig. 9, electronic data 201 is electronic data processed by data processing apparatus 200, and sub block data 202 is sub block data accompanying electronic data 201.

An input portion 203 reads electronic data 201 and sub block data 202. From electronic data 201 and sub block data 202 a data structure analysis portion 204 analyzes data's hierarchical structure. A sub block data creation portion 205 creates sub block data from electronic data 201 when sub block data 202 does not exist. A processing portion 206 performs a prescribed process based on the hierarchical structure analyzed by data structure analysis portion 204. A control portion 210 controls input portion 203, data structure analysis portion 204, sub block data creation portion 205, and processing portion 206. Electronic data 201 and sub block data 202 are recorded in recording medium 111, similarly as has been described in the first embodiment, and read into data processing apparatus 200.

Processing portion 206 can have different configurations for different contents of electronic data and different process. If data processing apparatus 200 is for example a display device for example displaying text, then, as shown in Fig. 9, processing portion 206 is configured of a layout calculation portion 207 using a resultant analysis provided by data structure analysis portion 204 to calculate a layout used to display the text, a display unit 209 using the calculated layout for display, and a user instruction processing portion 208 processing user instructions such as scrolling.

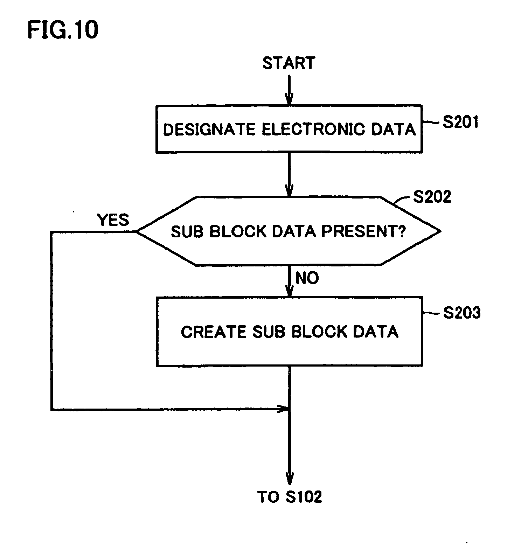

Fig. 10 represents a process in processing apparatus 200 in a flow chart.

With reference to Fig. 10, initially a user uses a keyboard, a mouse, a pen and/or the like to designate electronic data to be processed (S201). Via user instruction processing portion 208 at S202 a decision is made as to whether for the electronic data there exists sub block data. If so then a process similar to that described in the first embodiment is performed and the Fig. 6 step 102 and the subsequent steps are performed.

Otherwise, then at S203 sub block data is created and subsequently the Fig. 6 S 102 and the subsequent steps are performed. S102 and the subsequent steps are identical to those described in the first embodiment.

S203 will now be described more specifically.

Sub block data creation portion 205 divides electronic data received from input portion 202 into a plurality of blocks, examines a control code at each block's start/end location, and creates sub block data as shown in Fig. 3.

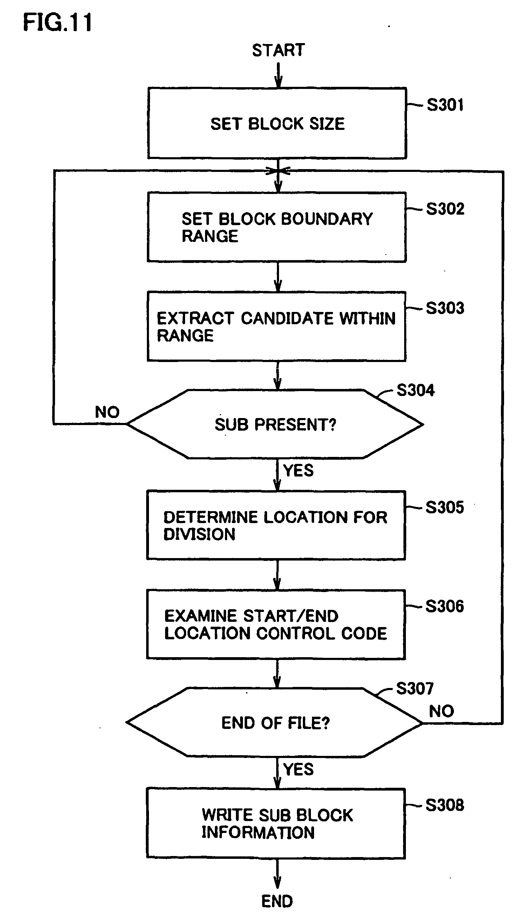

At S203, a process is performed, as shown in the flow chart of Fig. 11.

With reference to Fig. 11, initially a block size target value T is set (S301). As has been described previously, desirably an appropriate block size is determined by the processing apparatus's processing capability, the number of characters displayed on a screen, and factors that determine the same. Accordingly these parameters are referred to to set block size target value T. Note that in setting value T, a default value previously provided to the processing apparatus of interest or a user designated value may be used.

The Fig. 5 sub block data is created with a block size target value set at 200 bytes. It should be noted herein that a block size to be set is a target value because in general, data can be divided into blocks only at a limited location, as will be described hereinafter when S303 is described.

At S301 once block size target value T has been set, the control proceeds with S302 and an area of X bytes including a Tth byte as counted from the file's top is set as a block boundary search range. The value of X is set for example to a half of value T. Then at S303 within the search range a candidate boundary is extracted.

A candidate boundary varies depending on the type of electronic data of interest. For example if electronic data is an XML document, it is not separated in the middle of a tag, a comment or a character string but immediately before or after a tag. For example if there is a data string "<divid="ID1">abcdef</div>", a block boundary is set immediately before or after "<div id="ID1">" or immediately before or after "</div>". Separation is not introduced in the middle of a tag because separation in the middle of "<div id="ID1">" may interrupt a tag name, an attribute name, an attribute value and the like, and separation is not introduced in the character string element "abcdef" because a character string, text and the like sandwiched between tags often by themselves form a character string, text and the like that each have a meaning and desirably, dividing in the middle a character string, text and the like that each have a meaning should be avoided.

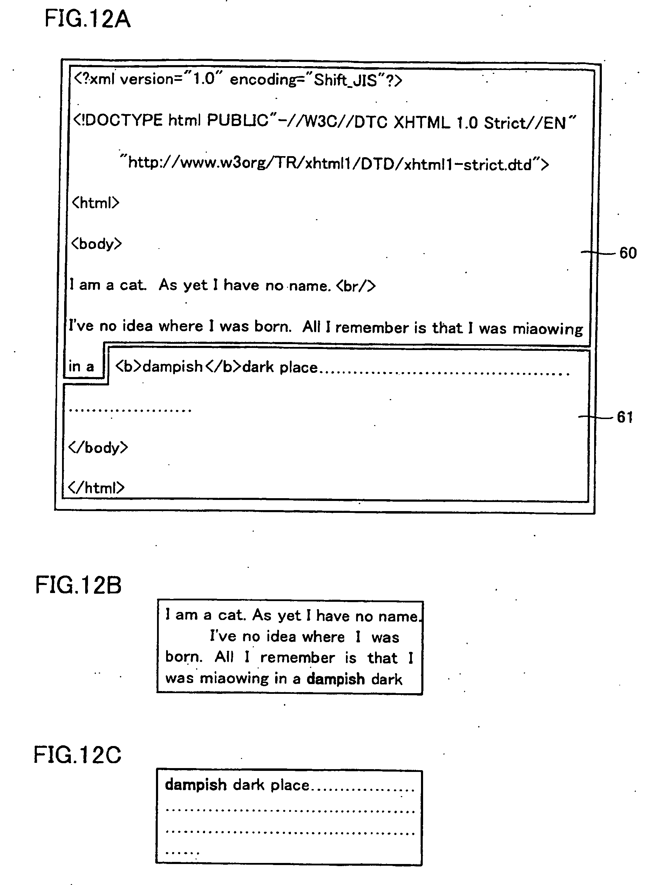

Furthermore, if data processing apparatus 200 is a display device displaying an electronic book such as an XHTML document, then in addition to the above described restriction it is desirable that a location immediately after a newline tag, a paragraph's top, or a similar location at which an indication starts from the beginning of a line be set as candidate boundaries. For example, Fig. 12A shows a specific example of an XHTML document divided in the middle of a line into two blocks 60 and 61 and Fig. 12B shows an example of displaying the XHTML document from the top.

If block 60 ends in the middle of a line, block 61 will be laid out from the middle of the line (from the third line at the seventh character et seq). On the other hand, when a user or the like issues an instruction to start an indication from the top of block 61, block 61 alone is read and a layout calculation is performed. Accordingly, as shown in Fig. 12C, block 61 is displayed from the top of a line. As such, if the user issues an instruction to scroll from block 61 to block 60 or in a direction opposite to that of the text, with indication of block 61 starting at different locations as shown in Figs. 12B and 12C, an indication out of order would be provided when blocks are switched.

If block division is limited to a location at which an indication starts from the beginning of a line, a layout is provided constantly from the beginning of a line regardless of an immediate preceding block's layout. This can eliminate such a problem as described above. Accordingly, for an electronic book such as an XHTML document, a block's candidate boundary is extracted from a location that immediately precedes or follows a tag and also allows an indication to start constantly the beginning of a line.

Then the number of candidate boundaries extracted at S303 is referred to to branch a condition at S304.

If no candidate boundary is found then the control proceeds with S302 and shifts the search range in the file downwards and, similarly as has been described previously, S302 and the subsequent steps are performed.

If there exists a candidate boundary, a candidate closest to a center of the search range set at S302 is selected and set as a boundary (S305). Then at S306 a block's start/end location's positional and hierarchical relationship as seen from the file's top is examined to obtain a single block of information to be recorded in block information 2.

Then whether this block's end is the file's end is determined (S308). If not then the control proceeds with S302 and continues an examination of a subsequent block.

If the block's end matches the file's end then at S308 the block information and electronic data's file name examined from S301 through S307 are recorded in sub block data. If necessary, link destination information is also examined and recorded in the sub block data. When S308 ends, the sub block data creation process ends.

Note that while in the present embodiment sub block data creation portion 205 is provided internal to data processing apparatus 200, sub block data creation portion 205 may be provided to server 110 described in the first embodiment and sub block data may be created therein.

In that case the process flows as has been described in the first embodiment. Furthermore, hardware or software that implements the function of sub block data creation portion 205 can be incorporated into a general-purpose personal computer (not shown) to convert content described in a general document description language to content having a data structure unique to the present invention. The content thus generated can be uploaded to server 110 of Fig. 1 and therefrom downloaded to a user's PC 115. This configuration can build a system creating and selling content which data processing apparatus 100 is caused to display. If data processing apparatus 100 is an electronic book viewer, such a system is effective in converting content of an electronic book described in a general-purpose document description language to a data structure dedicated to data processing apparatus 100 for provision.

Furthermore while the present embodiment has been described partially by referring to a display device as an example, it is apparent from the above description that the present invention is characterized in that sub block data can be created and processed to allow hierarchically structured electronic data to be only partially read and processed. Accordingly, in the Fig. 9 block diagram, by replacing processing portion 206 with that unique to the processing apparatus of interest the present invention can be applied not only to a display device but also general data processing apparatuses.

### Third Embodiment

The present invention in a third embodiment will now be described.

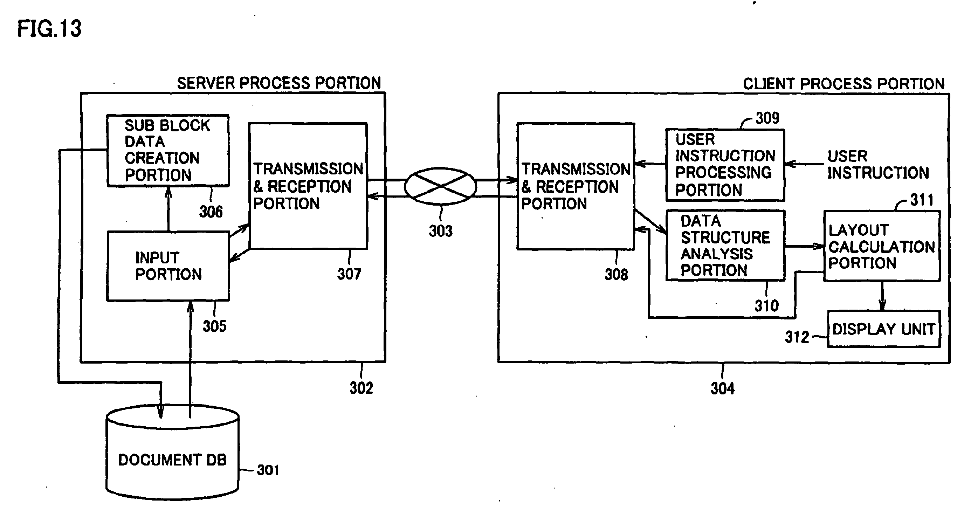

Fig. 13 is an exemplary block diagram of the data processing apparatus of the present invention in the third embodiment. For the sake of illustration, it will be described as a data display device by way of example.

As shown in Fig. 13, the data display device is divided mainly into three portions, i.e., a document database (DB) 301, a server process portion 302 and a client process portion 304. Server process portion 302 and client process portion 304 are connected by a network line 303.

Document DB 301 has stored therein electronic data to be processed and accompanying sub block data.

Server process portion 302 is configured of an input portion 305 reading electronic data and sub block data from document DB 301, a sub block data creation portion 306 creating and recording sub block data to document DB 301 when there does not exist sub block data for electronic data, and a transmission and reception portion 307 receiving a request from client process portion 304 and also transmitting designated data to client process portion 304.

Client process portion 304 includes a user instruction processing portion 309 processing electronic data to be processed, user instructions such as scroll, and the like, a transmission and reception portion 308 transmitting to server process portion 302 content of user instruction that has been analyzed at user instruction processing portion 309, and also receiving data transmitted from server process portion 302, a data structure analysis portion 310 analyzing a hierarchical structure of electronic data transmitted from server process portion 302, a layout calculation portion 311 using the hierarchical structure analyzed at data structure analysis portion 310 to calculate a layout used to display the electronic data, and a display unit 312 using the calculated layout to display the data. Note that when layout calculation portion 311 calculates a layout and as a result determines a layout only for a portion of display unit 312, a request may be issued via transmission and reception portion 308 to server process portion 302 to transmit necessary data.

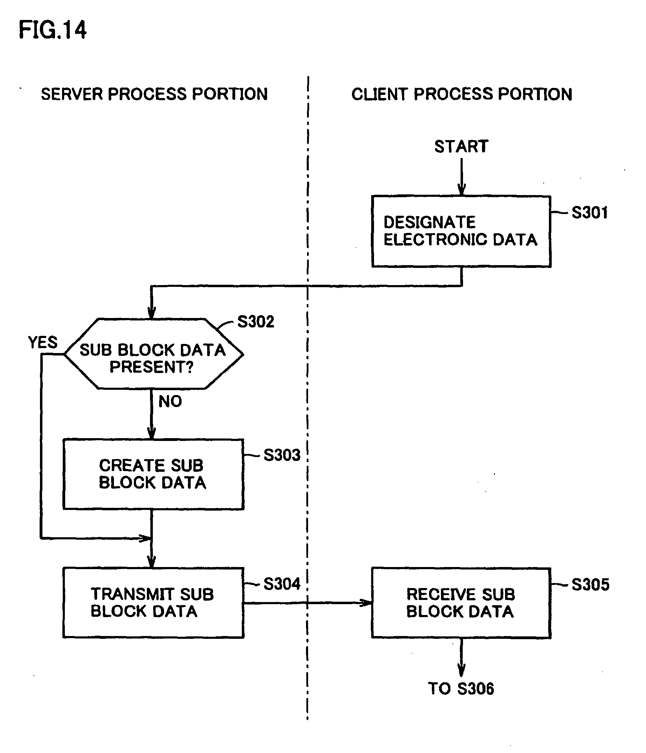

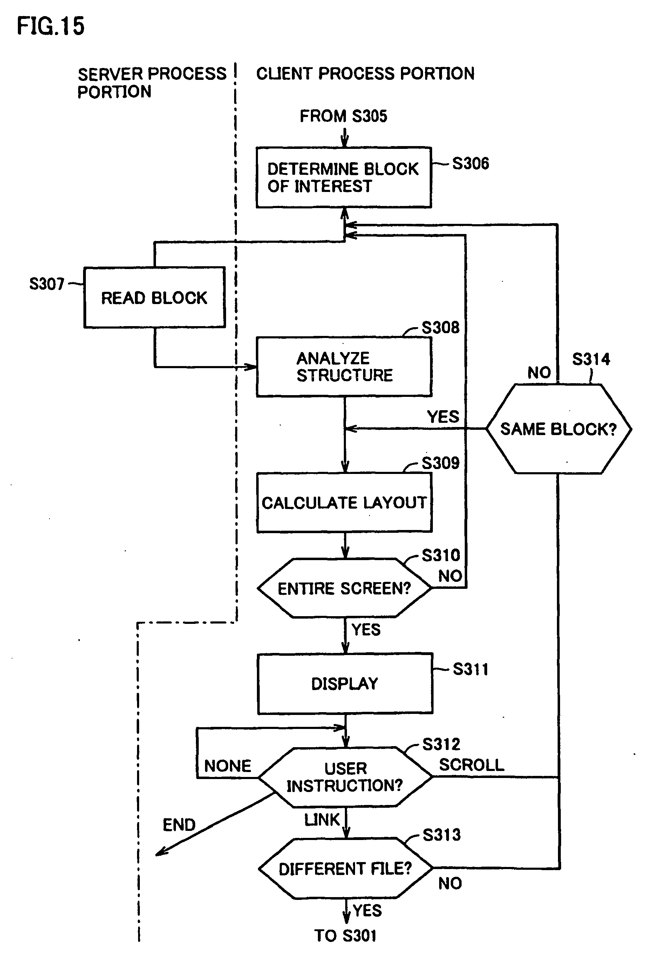

Reference will now be made to Figs. 14 and 15 to describe a flow of a process in the data display device of the present embodiment.

With reference to Fig. 14, initially when a user designates electronic data to be processed the electronic data's file name is transmitted to server process portion 302 (S301). Server process portion 302 examines if sub block data for the electronic data exist within document DB 301 (S302) and if not the control proceeds with S303, creates sub block data, and proceeds with S304. S303 is similar to that having been described with reference to Fig. 11. If at S302 sub block data exists then the control proceeds with S304.

At S304 the sub block data is transmitted to and received by client process portion 304 (S305).

Note that of these steps, at S301 a target block size for division that is determined by the display unit 312 screen size, memory capacity and the like may be transmitted together with the electronic data's file name and server process portion 302 may be driven by the block size to create sub block data. This allows a block division corresponding to the processing capability of client process portion 304, which ultimately provides users with further convenience.

Then, with reference to Fig. 15, client process portion 304 analyzes the received sub block data and determines which block is to be read, as based on each block's start/end location and the location of an area to be displayed on a screen, as seen from the file's top, and informs server process portion 302 of a block to be read (S306).

Server process portion 302 having received the request reads the designated block from document DB 301 and returns it to client process portion 304 (S307). Client process portion 304 performs from the received block data and content of sub block data a process similar to that described previously at S105, and thereafter from S106 performs a process similar to that described previously at S105 (S309-S314).

Thus even if electronic data to be processed exists on a server, a hierarchical structure can be considered while electronic data can have only a portion read and processed so that a faster process can be provided and a smaller memory can be used than when electronic data is entirely read and processed. Furthermore, only partially processing electronic data contributes to a reduced amount of data communicated on a network.

Note that while in the present embodiment sub block data creation portion 306 is provided internal to server process portion 302, sub block data creation portion 306 may be provided to document DB 301 or client process portion 304 to allow sub block data to be created in document DB 301 or client process portion 304.

Furthermore while in the above description a data display device has been exemplified, as is apparent from the above description, the present invention is characterized in that sub block data is used to perform a process to allow hierarchically structured electronic data to be only partially received and processed. Accordingly in the Fig. 13 block diagram by replacing layout calculation portion 311 and display unit 312 with a processing portion unique to the processing apparatus of interest the present invention can be applied not only to a display device but also general data processing apparatuses.

Furthermore the processes described in the first to third embodiments may partially or entirely be provided as an ordered row of instructions suitable for a process performed by a computer (i.e., a program). Furthermore, such programs can also be provided in the form of a computer readable recording medium having the program recorded therein for installing, executing and delivering the program.

Furthermore, the above program or content data having the data structure described in the first to third embodiments may be transmitted from a server apparatus via a network and thus provided to a client apparatus. In this case, the Fig. 1 server 110 includes a transmission portion transmitting the program or the content data.

The database processing apparatus in the present embodiment that is configured as described above allows hierarchically structured electronic data to be only partially read and processed as sub block data prepared for the electronic data is used and the hierarchically structure is thus Considered. A faster process can be provided and a smaller memory can be used than when the electronic data is entirely read and processed.

Furthermore, preparing a link destination's positional information for the sub block data allows an XHMTL document's link function or a similar move to any block to be a fast move.

Furthermore in the second embodiment the data processing apparatus is adapted to process electronic data free of sub block data after sub block data is created. Electronic data free of sub block data can also be processed rapidly and with a reduced amount of memory.

Furthermore in the present embodiment the data processing apparatus can generate substantially equally sized blocks. As such, if a user enters a scroll instruction to move an indication to a preceding or subsequent block the indication is displayed in substantially the same processing time. This can advantageously prevent the user from feeling uncomfortable. If there exists a block having an extremely large size, some processing apparatuses may run short of working memory and fail to operate normally. Substantially equally sized blocks hardly provide such a problem.

Furthermore in the third embodiment the data processing apparatus can read and process only a portion of electronic data when the electronic data and sub block data exist on a server connected via a network as the apparatus considers a hierarchical structure. A faster process can be provided and smaller memory can be used than when the electronic data is entirely downloaded from the server and processed.

### Industrial Applicability

Thus in accordance with the present invention hierarchically structured electronic data can be processed rapidly with reduced memory. The present invention is thus advantageously applicable to data processing methods, programs and apparatuses.

## Claims

1. A method of processing structured data formed of hierarchically structured electronic data and sub block data used to divide said electronic data into a plurality of blocks independently from a hierarchical structure of said electronic data for processing, said sub block data (102) includes positional information for recording a position of each said block of electronic data (101), and hierarchical information of said block at a start location and an end location, wherein said hierarchical information include a stack of control codes that are still active for the hierarchical level of the current position at the start location of the block and at the end location of the block, and each of the blocks is divided so that the boundaries of the block avoid interrupting the control code string, the method comprising the steps of:
reading from said electronic data (101) a block including desired electronic data;
using the sub block data (102) of said read block to record the control code that is still active at the start location of the block data, the block data, and the control code that is still active at the end location of the block in this order, and analyze a hierarchical structure of said desired electronic data (101); and
using a resultant analysis of said hierarchical structure to perform a prescribed process.

2. The method of claim 1, wherein said electronic data (101) is electronic data for display and said prescribed process is a process calculating a layout used to display said read block and displaying said read block according to said layout.

3. The method of claim 1, further comprising the step of creating sub block data (102) for said electronic data free of sub block data (102) before said electronic data (101) is processed.

4. The method of claim 1, wherein said plurality of blocks are substantially equal in size.

5. The method of claim 1, wherein when said electronic data (101) includes a link function allowing a jump within said electronic data (101) to any location, said sub block data (102) includes positional information of a destination of a jump effected by all link functions in said electronic data (101).

6. A method of claim 1, further comprising the steps of:
transmitting to a server (110) a name of said electronic data to be subjected to said prescribed process;
receiving said sub block data (102) from said server for dividing said electronic data into a plurality of blocks for processing; and
requesting said server (110) to transmit said block including said electronic data to be subjected to said prescribed process, and receiving said block's data.

7. The method of claim 6, wherein in the step of receiving said sub block data (102) from said server (110) when said sub block data is absent said sub block data (102) is created and then received from said server (110).

8. A data processing program causing a prescribed process to be performed in accordance with a definition of a prescribed document description language for structured data including hierarchically structured electronic data (101) and sub block data (102) used to divide said electronic data (101) into a plurality of blocks independently from a hierarchical structure of said electronic data for processing, said electronic data (101) and said sub block (102) data being paired, said sub block data includes positional information for recording a position of each said sub block of electronic data, and hierarchical information of said block at a start location and an end location, wherein said hierarchical information include a stack of control codes that arc still active for the hierarchical level of the current position at the start location of the block and at the end location of the block, wherein each block is divided so that the boundaries of the block avoid interrupting the control code string, wherein the program causing a computer to execute the steps of:
reading block data of said electronic data, as based on said sub block data;
analyzing from said read block data and said sub block data a hierarchical structure included in said block data by linking the control code that is still active at the start location of the block data, the block data, and the control code that is still active at the end location of the block in this order; and
in accordance with a resultant analysis of said hierarchical structure and said definition of said document description language, causing said prescribed process to be performed for said block data.

9. A data processing program of claim 8 causing said computer (115) to execute the further steps of:
transmitting to a server (110) a name of said electronic data (101) to be subjected to said prescribed process;
receiving said sub block data (102) from said server (110) for dividing said electronic data (101) into a plurality of blocks for processing; and
requesting said server (110) to transmit said block including said electronic data to be subjected to said prescribed process, and receiving said block's data.

10. A data processing apparatus processing hierarchically structured electronic data, said electronic data (101) being accompanied by sub block data (102) corresponding to auxiliary information for dividing said electronic data (101) into a plurality of blocks independently from the hierarchical structure of the electronic data for processing, said sub block data (102) includes positional information for recording a position of each said block of electronic data (101), and hierarchical information of said block at a start location and an end location, wherein said hierarchical information include a stack of control codes that are still active for the hierarchic al level of the current position at the start location of the block and at the end location of the block and each of the blocks is divided so that the boundaries of the block avoid interrupting the control code strong, the apparatus comprising:
an input portion (103) reading a block including said electronic data (101) to be processed, and said sub block data (102);
a data structure analysis portion (104) using said sub block data (102) to record the control code that is still active at the start location of the block data, the block data, and the control code that is still active at the location of the block in this order, and analyze a hierarchical structure of said block read; and
a processing portion (105) using a result provided by said data structure analysis portion to perform a prescribed process.

11. The apparatus of claim 10, said electronic (101) data being document data for display, said processing portion (304) includes:
a layout calculation portion (106), (311) using said hierarchical structure of said block analyzed by said data structure analysis portion (310) to calculate a layout used to display said read block; and
a display unit (108), (312) using said layout for display.

12. A data processing apparatus of claim 10 further comprising:
a transmission and reception portion (308) transmitting to a server (110) said block including said electronic data (101) to be subjected to said prescribed process, and receiving data of said block and said sub block data (102) from said server (110).

13. The apparatus of one of claims 10 and 12, being a mobile terminal.

14. A transmission device comprising a transmission portion transmitting the data processing program recited in claim 8.

## Patentansprüche

1. Ein Verfahren zum Verarbeiten strukturierter Daten, die gebildet werden aus strukturierten elektronischen Daten und Teilblockdaten, die verwendet werden, um die elektronischen Daten in eine Vielzahl von Blöcken unabhängig von einer hierarchischen Struktur der elektronischen Daten für eine Verarbeitung zu unterteilen, wobei die Teilblockdaten (102) enthalten Positionsinformation zum Aufzeichnen einer Position von jedem Block von elektronischen Daten (101), und hierarchische Information des Blocks in einer Startstelle und einer Endstelle, wobei die hierarchische Information enthält einen Stapel von Steuercodes, die für die hierarchische Ebene der aktuellen Position in der Startstelle des Blocks und in der Endstelle des noch Blocks aktiv sind, und jeder der Blöcke so unterteilt wird, dass die Grenzen des Blocks Unterbrechen der Steuercodekette vermeiden, das Verfahren die Schritte umfassend zum:
Lesen aus den elektronischen Daten (101) eines Blocks, der gewünschte elektronische Daten enthält;
Verwenden der Teilblockdaten (102) des gelesenen Blocks, um den Steuercode, der in der Startstelle der Blockdaten noch aktiv ist, die Blockdaten und den Steuercode, der in der Endstelle des Blocks noch aktiv ist, in dieser Reihenfolge aufzuzeichnen, und eine hierarchische Struktur der gewünschten elektronischen Daten (101) zu analysieren; und
Verwenden einer resultierenden Analyse der hierarchischen Struktur, um einen vorgeschriebenen Prozess durchzuführen.

2. Das Verfahren nach Anspruch 1, wobei die elektronischen Daten (101) elektronische Daten für eine Anzeige sind und der vorgeschriebene Prozess ein Prozess ist, der einen Aufbau (Layout) kalkuliert, der verwendet wird, um den gelesenen Block anzuzeigen, und den gelesenen Block gemäß dem Aufbau anzeigt.

3. Das Verfahren nach Anspruch 1, ferner umfassend den Schritt zum Erstellen von Teilblockdaten (102) für die elektronischen Daten frei von Teilblockdaten (102), bevor die elektronischen Daten (101) verarbeitet werden.

4. Das Verfahren nach Anspruch 1, wobei die Vielzahl von Blöcken in der Größe im wesentlichen gleich sind.

5. Das Verfahren nach Anspruch 1, wobei wenn die elektronischen Daten (101) eine Verknüpfungsfunktion enthalten, die erlaubt, innerhalb der elektronischen Daten (101) zu einer beliebigen Stelle zu springen, die Teilblockdaten (102) Positionsinformation eines Ziels eines Sprungs enthalten, der durch alle Verknüpfungsfunktionen in den elektronischen Daten (101) bewirkt wird.

6. Ein Verfahren nach Anspruch 1, ferner umfassend die Schritte zum:
Übertragen zu einem Server (110) eines Namens der elektronischen Daten, die dem vorgeschriebenen Prozess zu unterziehen sind;
Empfangen der Teilblockdaten (102) von dem Server zum Unterteilen der elektronischen Daten in eine Vielzahl von Blöcken für eine Verarbeitung; und
Auffordern des Servers (110), den Block zu übertragen, der die elektronischen Daten enthält, die dem vorgeschriebenen Prozess zu unterziehen sind, und Empfangen der Daten des Blocks.

7. Das Verfahren nach Anspruch 6, wobei in dem Schritt zum Empfangen der Teilblockdaten (102) von dem Server (110), wenn die Teilblockdaten fehlen, die Teilblockdaten (102) erstellt werden und dann von dem Server (110) empfangen werden.

8. Ein Datenverarbeitungsprogramm, das bewirkt, dass ein vorgeschriebener Prozess durchzuführen ist in Übereinstimmung mit einer Definition einer vorgeschriebenen Dokumentbeschreibungssprache für strukturierte Daten, die enthalten hierarchisch strukturierte elektronische Daten (101) und Teilblockdaten (102), die verwendet werden, um die elektronischen Daten (101) in eine Vielzahl von Blöcken unabhängig von einer hierarchischen Struktur der elektronischen Daten für eine Verarbeitung zu unterteilen, wobei die elektronischen Daten (101) und die Teilblockdaten (102) gepaart sind, die Teilblockdaten enthalten Positionsinformation zum Aufzeichnen einer Position von jedem Teilblock von elektronischen Daten, und hierarchische Information des Blocks in einer Startstelle und einer Endstelle, wobei die hierarchische Information enthält einen Stapel von Steuercodes, die für die hierarchische Ebene der aktuellen Position in der Startstelle des Blocks und in der Endstelle des Blocks noch aktiv sind, wobei jeder Block so unterteilt ist, dass die Grenzen des Blocks Unterbrechen der Steuereodekette vermeiden, wobei das Programm einen Computer veranlasst, die Schritte auszuführen zum:
Lesen von Blockdaten der elektronischen Daten, wie auf den Teilblockdaten basiert;
Analysieren aus den gelesenen Blockdaten und den Teilblockdaten einer hierarchischen Struktur, die in den Blockdaten enthalten ist durch Verknüpfen des Steuercodes, der in der Startstelle der Blockdaten noch aktiv ist, der Blockdaten und des Steuercodes, der in der Endstelle des Blocks noch aktiv ist, in dieser Reihenfolge; und
Veranlassen, in Übereinstimmung mit einer resultierenden Analyse der hierarchischen Struktur und der Definition der Dokumentbeschreibungssprache, dass der vorgeschriebene Prozess für die Blockdaten durchgeführt wird.

9. Ein Datenverarbeitungsprogramm nach Anspruch 8, das den Computer (115) veranlasst, die weiteren Schritte auszuführen zum:
Übertragen zu einem Server (110) eines Namens der elektronischen Daten (102), die dem vorgeschriebenen Prozess zu unterziehen sind;
Empfangen der Teilblockdaten (102) von dem Server (110) zum Unterteilen der elektronischen Daten (101) in eine Vielzahl von Blöcken für eine Verarbeitung; und
Auffordern des Servers (110), den Block zu übertragen, der die elektronischen Daten enthält, die dem vorgeschriebenen Prozess zu unterziehen sind, und Empfangen der Daten des Blocks.

10. Eine Datenverarbeitungsvorrichtung, die hierarchisch strukturierte elektronische Daten verarbeitet, wobei die elektronischen Daten (101) begleitet werden durch Teilblockdaten (102) entsprechend Hilfsinformation zum Unterteilen der elektronischen Daten (101) in eine Vielzahl von Blöcken unabhängig von der hierarchischen Struktur der elektronischen Daten für eine Verarbeitung, wobei die Teilblockdaten (102) enthalten Positionsinformation zum Aufzeichnen einer Position von jedem Block von elektronischen Daten (101), und hierarchische Information des Blocks in einer Startstelle und einer Endstelle, wobei die hierarchische Information enthält einen Stapel von Steuercodes, die für die hierarchische Ebene der aktuellen Position in der Startstelle des Blocks und in der Endstelle des Blocks noch gültig sind und jeder der Blöcke so unterteilt ist, dass die Grenzen des Blocks Unterbrechen der Steuercodekette vermeiden, die Vorrichtung umfassend:
einen Eingabeabschnitt (103), der einen Block liest, der die elektronischen Daten (101), die zu verarbeiten sind, und die Teilblockdaten (102) enthält;
einen Datenstruktur-Analyseabschnitt (104), der die Teilblockdaten (102) verwendet, um den Steuercode, der in der Startstelle der Blockdaten noch aktiv ist, die Blockdaten und den Steuercode, der in der Stelle des Blocks noch aktiv ist, in dieser Reihenfolge aufzuzeichnen, und eine hierarchische Struktur des gelesenen Blocks zu analysieren; und
einen Verarbeitungsabschnitt (105), der ein Ergebnis verwendet, das durch den Datenstruktur-Analyseabschnitt bereitgestellt wird, um einen vorgeschriebenen Prozess durchzuführen.

11. Die Vorrichtung nach Anspruch 10, wobei die elektronischen Daten (101) Dokumentdaten für eine Anzeige sind, der Vorarbeitungsabschnitt (304) enthält:
einen Aufbaukalkulationsabschnitt (106), (311), der die hierarchische Struktur des Blocks verwendet, die durch den Datenstruktur-Analyseabschnitt (310) analysiert wird, um einen Aufbau zu kalkulieren, der verwendet wird, um den gelesenen Block anzuzeigen; und
eine Anzeigeeinheit (108), (312), die den Aufbau für eine Anzeige verwendet.

12. Eine Datenverarbeitungsvorrichtung nach Anspruch 10, ferner umfassend:
einen Übertragungs- und Empfangsabschnitt (308), der zu einem Server (110) den Block überträgt, der die elektronischen Daten (101) enthält, die dem vorgeschriebenen Prozess zu unterziehen sind, und Daten des Blocks und die Teilblockdaten (102) von dem Server (110) empfängt.

13. Die Vorrichtung nach einem von Ansprüchen 10 und 12, die ein mobiles Endgerät ist.

14. Eine Übertragungseinrichtung, umfassend einen Übertragungsabschnitt, der das Datenverarbeitungsprogramm überträgt, das in Anspruch 8 vorgetragen wird.

## Revendications

1. Procédé de traitement de données structurées formées de données électroniques hiérarchiquement structurées et de données de sous-bloc utilisées pour diviser lesdites données électroniques en une pluralité de blocs indépendamment d'une structure hiérarchique desdites données électroniques pour traitement, lesdites données de sous-bloc (102) comprennent des informations positionnelles pour enregistrer une position de chaque dit bloc de données électroniques (101), et des informations hiérarchiques dudit bloc au niveau d'un emplacement de départ et d'un emplacement de fin, dans lequel lesdites informations hiérarchiques comprennent une pile de codes de commande qui sont toujours actifs pour le niveau hiérarchique de la position actuelle au niveau de l'emplacement de départ du bloc et au niveau de l'emplacement de fin du bloc, et chacun des blocs est divisé de sorte que les limites du bloc évitent d'interrompre la chaîne de codes de commande, le procédé comprenant les étapes consistent à :
lire depuis lesdites données électroniques (101) un bloc comprenant des données électroniques souhaitées ;
utiliser les données de sous-bloc (102) dudit bloc lu pour enregistrer le code de commande qui est toujours actif au niveau de l'emplacement de départ des données de bloc, les données de bloc et le code de commande qui est toujours actif au niveau de l'emplacement de fin du bloc dans cet ordre, et pour analyser une structure hiérarchique desdites données électroniques souhaitées (101) ; et
utiliser une analyse résultante de ladite structure hiérarchique pour effectuer un processus prescrit.

2. Procédé selon la revendication 1, dans lequel lesdites données électroniques (101) sont des données électroniques pour affichage et ledit processus prescrit est un processus calculant une mise en page utilisée pour afficher ledit bloc lu et affichant ledit bloc lu selon ladite mise en page.

3. Procédé selon la revendication 1, comprenant en outre l'étape consistant a créer des données de sous-bloc (102) pour lesdites données électroniques exemptes de données de sous-bloc (102) avant le traitement desdites données électroniques (101).

4. Procédé selon la revendication 1, dans lequel ladite pluralité de blocs sont de taille sensiblement égale.

5. Procédé selon la revendication 1, dans lequel, lorsque lesdites données électroniques (101) comprennent une fonction de liaison permettant un saut dans lesdites données électroniques (101) vers tout emplacement, lesdites données de sous-bloc (102) comprennent des informations positionnelles d'une destination d'un saut effectué par toutes les fonctions de liaison dans lesdites données électroniques (101).

6. Procédé selon la revendication 1, comprenant en outre les étapes consistant à :
transmettre à un serveur (110) un nom desdites données électroniques à soumettre audit processus prescrit ;
recevoir lesdites données de sous-bloc (102) en provenance dudit serveur pour diviser lesdites données électroniques en une pluralité de blocs pour traitement ; et
demander audit serveur (110) de transmettre ledit bloc comprenant lesdites données électroniques à soumettre audit processus prescrit, et recevoir les données dudit bloc.

7. Procédé selon la revendication 6, dans lequel, dans l'étape consistant à recevoir lesdites données de sous-bloc (102) en provenance dudit serveur (110) lorsque lesdites données de sous-bloc sont absentes, lesdites données de sous-bloc (102) sont créées puis reçues en provenance dudit serveur (110).

8. Programme de traitement de données amenant un processus prescrit à être effectué conformément à une définition d'un langage de description de document prescrit pour des données structurées comprenant des données électroniques hiérarchiquement structurées (101) et des données de sous-bloc (102) utilisées pour diviser lesdites données électroniques (101) en une pluralité de blocs indépendamment d'une structure hiérarchique desdites données électroniques pour traitement, lesdites données électroniques (101) et lesdites données de sous-bloc (102) étant appariées, lesdites données de sous-bloc comprennent des informations positionnelles pour enregistrer une position de chaque dit sous-bloc de données électroniques, et des informations hiérarchiques dudit bloc au niveau d'un emplacement de départ et d'un emplacement de fin, dans lequel lesdites informations hiérarchiques comprennent une pile de codes de commande qui sont toujours actifs pour le niveau hiérarchique de la position actuelle au niveau de l'emplacement de départ du bloc et au niveau de l'emplacement de fin du bloc, dans lequel chaque bloc est divisé de sorte que les limites du bloc évitent d'interrompre la chaîne de codes de commande, dans lequel le programme amène un ordinateur à exécuter les étapes consistant à :
lire des données de bloc desdites données électroniques, comme sur la base desdites données de sous-bloc ;
analyser à partir desdites données de bloc lues et desdites données de sous-bloc une structure hiérarchique incluse dans lesdites données de bloc en liant le code de commande qui est toujours actif au niveau de l'emplacement de départ des données de bloc, les données de bloc et le code de commande qui est toujours actif au niveau de l'emplacement de fin du bloc dans cet ordre ; et
conformément à une analyse résultante de ladite structure hiérarchique et à ladite définition dudit langage de description de document, amener ledit processus prescrit à être effectué pour lesdites données de bloc.

9. Programme de traitement de données selon la revendication 8, amenant ledit ordinateur (115) à exécuter les étapes supplémentaires consistant à :
transmettre à un serveur (110) un nom desdites données électroniques (101) à soumettre audit processus prescrit ;
recevoir lesdites données de sous-bloc (102) en provenance dudit serveur (110) pour diviser lesdites données électroniques (101) en une pluralité de blocs pour traitement ; et
demander audit serveur (110) de transmettre ledit bloc comprenant lesdites données électroniques à soumettre audit processus prescrit, et recevoir les données dudit bloc.

10. Appareil de traitement de données traitant des données électroniques hiérarchiquement structurées, lesdites données électroniques (101) étant accompagnées de données de sous-bloc (102) correspondant à des informations auxiliaires pour diviser lesdites données électroniques (101) en une pluralité de blocs indépendamment de la structure hiérarchique des données électroniques pour traitement, lesdites données de sous-bloc (102) comprennent des informations positionnelles pour enregistrer une position de chaque dit bloc de données électroniques (101), et des informations hiérarchiques dudit bloc au niveau d'un emplacement de départ et d'un emplacement de fin, dans lequel lesdites informations hiérarchiques comprennent une pile de codes de commande qui sont toujours actifs pour le niveau hiérarchique de la position actuelle au niveau de l'emplacement de départ du bloc et au niveau de l'emplacement de fin du bloc et chacun des blocs est divisé de sorte que les limites du bloc évitent d'interrompre la chaîne de codes de commande, l'appareil comprenant :
une partie d'entrée (103) lisant un bloc comprenant lesdites données électroniques (101) à traiter, et lesdites données de sous-bloc (102) ;
une partie d'analyse de structure de données (104) utilisant lesdites données de sous-bloc (102) pour enregistrer le code de commande qui est toujours actif au niveau de l'emplacement de départ des données de bloc, les données de bloc et le code de commande qui est toujours actif au niveau de l'emplacement du bloc dans cet ordre, et analyser une structure hiérarchique dudit bloc lu ; et
une partie de traitement (105) utilisant un résultat fourni par ladite partie d'analyse de structure de données pour effectuer un processus prescrit.

11. Appareil selon la revendication 10, lesdites données électroniques (101) étant des données de document pour affichage, ladite partie de traitement (304) comprend :
une partie de calcul de mise en page (106), (311) utilisant ladite structure hiérarchique dudit bloc analysé par ladite partie d'analyse de structure de données (310) pour calculer une mise en page utilisée pour afficher ledit bloc lu ; et
une unité d'affichage (108), (312) utilisant ladite mise en page pour affichage.

12. Appareil de traitement de données selon la revendication 10, comprenant en outre :
une partie de transmission et de réception (308) transmettant à un serveur (110) ledit bloc comprenant lesdites données électroniques (101) à soumettre audit processus prescrit, et recevant des données dudit bloc et lesdites données de sous-bloc (102) en provenance dudit serveur (110).

13. Appareil selon l'une des revendications 10 et 12, étant un terminal mobile.

14. Dispositif de transmission comprenant une partie de transmission transmettant le programme de traitement de données selon la revendication 8.
